# EUROPEAN PATENT APPLICATION

(11) **EP 2 228 548 A1**
(43) Date of publication of application: **15.09.2010**
(21) Application number: 10153094.7
(22) Date of filing: 09.02.2010
(51) Int. Cl.: F16B 7/04

(54) **Square for joining two profiles**

(30) Priority: 13.03.2009 IT BS20090046
(71) Applicant: L.F.T. Lavorazioni Fabbricazioni Tecniche di Lodovelli Giuseppe E C. S.N.C., 26835 Crespiatica (LO) (IT)
(72) Inventor: Lodovelli, Giuseppe, 26835, CRESPIATICA (LO) (IT)
(74) Representative: Tirloni, Bartolomeo

(57) **Abstract**

A square (1) for joining two aluminum profiles (2) of a frame, the square comprising a first (3) and a second (4) half-portion being mutually stiffly fastened to a first end (5) thereof and free on a second end (6) thereof, each half-portion being introduced into a respective slot (7) of a respective profile (2), wherein the first (3) and the second half portion (4) have a plurality of elastic teeth (8) developing on a curved surface wherein the distance of the tooth (8) from the surface (10) of the first half-portion (3) increases more than linearly moving from the first (9) to the second end (11) of the tooth, and wherein, when the tooth is subject to a force pointing towards the first half-portion (3), it bends and the second end (11) of the tooth (8) reacts elastically with a force pointing away from the first half-portion (3).

## Description

The present invention relates to a square for joining two profiles, typically made of aluminum, in particular for manufacturingframes, and to a method for joining two profiles making use of this square.

It is known about an aluminum square used for right-angle joining two profiles, also made of aluminum, havinga free edge cut at 45° with respect to the longitudinal development of the profile. This square, made as one piece, consists of two identical half-portions thatare substantially prism-shaped (typically with a rectangular basis) and joined along a respective edge in a mutuallyorthogonal manner,so that the square has a plane of symmetry bisectingthe 90° angle formed by the two half-portions. The outer surface, with respect to the 90° angle, of the square is completely smooth, whereas the inner surface of each half-portion has a sag developing along the whole transversal size of the square. Each half-portion is introduced into a slot matching the half-portion and lying on the aforesaid free edge of the respective profile and developing longitudinally to the profile, typically along the whole longitudinal development of the profile. The half-portions are introduced until the two edges cut at 45° of the two profiles to be joined are in contact with each other. In order to ensure a stable connection between the two profiles and prevent the latter from disengaging from the square, it is known to carry out the so-called "calking", or plastic deformation, thanks to the application of a pressing force towards the inside of the profile, of the portion of lateral wall of the profile lying in correspondence of the aforesaid sag of the square, towards the sag. The deformed wall thusabutsagainst the side walls of the sag and establishes a mechanical clamping preventing the profile from disengaging.

The Applicant has found thatthe aforesaid, known square and the aforesaid method for joining two profiles have some drawbacks. Among these, the aforesaid joining method has the drawback of a long, complex and expensive implementation. In particular, it includes the calking step, which requires time and dedicated tools and labor.

Document FR 1 565 118 discloses a pair of assembly elements equipped with protruding sharp parts. However, the Applicant thinks that the plane development of the protruding parts does not enable a correct function thereof.

Under these circumstances,the technical task underlying the present invention is to propose a square for joining two profiles and a related joining method, which overcome, beyond the rest, one or more of the drawbacks of the prior art mentioned above.

One of the aims of the present invention in one or more of its various aspects is to provide a square for joining two profiles and a related joining method preventing or anyhow not requiring the calking step.

One of the aims of the present invention in one or more of its various aspects is to provide a square for joining two profiles and a related joining method ensuring optimal levels of accuracy for the connection and/or of mechanical strength and/or of mechanical resistance to profile disengagement.

One of the aims of the present invention in one or more of its various aspects is to provide a square for joining two profiles which is easy and cheap to manufacture and/or store and/or install and/or use.

One of the aims of the present invention in one or more of its various aspects is to provide a method for joining two profiles which is easy and/or cheap and/or fast to be implemented.

One of the technical tasks and/or of the aims referred to above are basically achieved by a square for joining two profiles, an assembly comprising the two profiles and the square, and a related joining method, comprising the technical features of one or more of the appended claims (considered without their dependent claims) and/or disclosed below, also variously combined one with the other.

In one aspect, the invention relates to a square for joining two profiles, typically made of metal such as aluminum, the square comprising a first and a second half-portion mutually stiffly fastened to a first end and free on a second end, each half-portion being intended to be introduced, on the same side as the respective free end, into a slot of a respective profile of the two profiles.

In one aspect of the invention, at least the first half-portion is provided with at least one tooth havinga first end integral with a surface of the first half-portion, and a second end lying, at least when the tooth is not subject to forces, outside said surface and located, with respect to the first end of the tooth, in position more proximal to the first end of the first half-porfion.

In one aspect, the second end of the tooth is positioned so thatwhen the first half-portion is introduced into said slot of the respective profile, said second end lies inside said slot and points towards the inlet of the slot.

In one aspect, when the first half-portion is introduced into said slot of the respective profile, said second end lies in position more proximal to the inlet of the slot thanthe first end.

In one aspect, when the first half-portion is introduced into said slot of the respective profile, the tooth is pressed between the aforesaid surface of the first half-portion and an inner surface of the aforesaid slot of the profile.

In one aspect, said at least one tooth is elastic. Preferably, when said tooth (typically said second end of the tooth) is subject to a force pointing towards the aforesaid surface, said tooth bends so thatsaid second end elastically reacts to the aforesaid bending with a force pointing away from the aforesaid surface. In one aspect, during the aforesaid bending said second end approaches the aforesaid surface.

In one aspect, said second end of the tooth is free.

In one aspect, said at least one tooth has a substantially laminar shape, which can develop on an inclined plane with respect to the aforesaid surface or on a curved surface, wherein e.g. the distance of the tooth from the aforesaid surface of the first half-portion increases more thanlinearly moving from the first to the second end of the tooth. Preferably, the tooth is obtained by making a cut in a wall of said first half-portion, defining the aforesaid surface, and by bending on said first end of the tooth.

In one aspect, said second end of the tooth has at least one tip facing the aforesaid first end of the half-portion. For instance, said at least one tooth has a triangular laminar shape. Preferably, the tooth is obtained by progressivelypunching a foil,corresponding to a wall of said first half-portion comprising the aforesaid surface, with a punch havinga triangular cross section and equipped with a cuttingedge with an inclined triangular face havinga vertex as end tip, by progressivelypunching the foil starting from the aforesaid vertex (which is typically located on the second end of the tooth). Thus, advantageously, the aforesaid curved surface is obtained directly from the cuttingoperation.

In one aspect, said at least one tooth is made of steel (typically, though not necessarily, stainlesssteel), preferably of hardened steel. In one aspect, said at least one tooth is made of spring steel. Thus, the tooth can be given the desired elasticity. Preferably, said first half-portion comprises a wall, defining the aforesaid surface, made of the same material as the tooth.

In one aspect of the invention, also the second half-portion is provided with at least one tooth according to any one of the above aspects.

In one aspect, the second half-portion is wholly identical to the first half-portion.

In one aspect, the first and second half-portion are mutually stiffly fastened at an angle, typically at a right angle.

In one aspect, the first and/or second half-portion is equipped with a plurality of teeth each according to any one of the above aspects. Typically, this plurality of teeth comprises at least three teeth. Preferably, the teeth of the first and/or of the second half-portion are divided into one or more sub-groups and are parallel to each other within the same sub-group. In one aspect, the teeth of each sub-group of the first and/or the second half-portion lie all on the same plane.

In one aspect, the first and second half-portion comprise each a main body, typically made of aluminum, stiffly fastened to the aforesaid first end of the respective half-portion, to the main body of the other half-portion (typically the two main bodies of the first and of the second half-portion form one piece) and free on the aforesaid second end of the respective half-portion. Typically, the two main bodies are mutually fastened at an angle, typically at a right angle.

In one aspect, each main body has four lateral surfaces, typically developing longitudinally to the respective half-portion. Typically, though not necessarily, each main body has a rectangular orthogonal section.

In one aspect, each main body is associated to a respective secondary body, comprising the aforesaid at least one tooth or the aforesaid plurality of teeth, in any one of the above aspects.

In one aspect, said secondary body has a laminar shape, typically a plane shape.

In one aspect, said secondary body is wholly made of the same aforesaid material as the tooth.

In one aspect, said secondary body is associated, typically fastened, to a lateral surface of the respectivemain body. Preferably, the aforesaid lateral surface has a depressed seat for housing the respective secondary body embedded therein, which can typically be introduced by orthogonal sliding into the aforesaid seat. Optionally, the respective secondary body has one or more through holes for fastening it to the respective main body.

In one aspect, the secondary body associated to one of the two main bodies is stiffly fastened, typically as one piece,to the secondary body associated to the other main body. Typically, the two secondary bodies are mutually fastened at an angle, e.g.at a right angle.

In one aspect, each main body is associated, typically on two opposite lateral surfaces, to two respectivesecondary bodies each according to any one of the above aspects.

In one aspect, the first and/or the second half-portion has a laminar shape, typically substantially plane (except for teeth projection). In this aspect, preferably the first and/or the second half-portion lie in the same plane. Still in this aspect, preferably the first and the second half-portion are made as one piece.

In one aspect, the square consists of a first and a second half-portion with laminar shape, substantially co-planar, made as one piece.

In one aspect, the present invention relates to an assembly comprising two profiles, typically of a frame, each profile havingon a free edge at least one slot developing inside and longitudinally to the profile, typically along the whole longitudinal development of the profile, and a square according to any one of the above aspects, wherein each half-portion of the square is introduced, on the same side as the respective free end of the half-portion, into the aforesaid slot of a respective profile, so thateach tooth is pressed against an inner surface of the aforesaid slot of the profile (typically between the aforesaid surface of the respective half-portion and the inner surface of the aforesaid slot of the profile). Preferably, the material which the tooth is made of (e.g. hardened spring steel) is harder th an the material which the profile is made of (e.g. aluminum).

In one aspect, said surface of the respective half-portion faces the inner side of the profile.

In one aspect, said surface of the respective half-porfion faces the lateral side of the profile or the two lateral opposite sides of the profile.

In one aspect, the assembly comprises another square arranged parallel to the aforesaid square and typically aligned with it with respect to the orthogonal plane of the respective profile.

In one aspect, the present invention relates to a method for joining two profiles, typically for manufacturing a frame, each profile having on a free edge at least one slot developing inside and longitudinally to the profile, typically along the whole longitudinal development of the profile, by means of a square according to any one of the above aspects, wherein each half-portion of the square is introduced, on the same side as the respective free end of the half-portion, into the aforesaid slot of a respective profile, so thateach tooth is pressed between the aforesaid surface of the respective half-portion and an inner surface of the aforesaid slot of the profile.

Further characteristics and advantages of the present invention will be more evident thanks to the indicative, and therefore non-limiting, description of some preferred embodiments of a square for joining two profiles, of an assembly comprising the two profiles and the square, and of a related joining method, according to the present invention, thanks to the accompanying drawings, wherein:
- Figure 1 is a perspective view of an embodiment of the square for joining two profiles according to the present invention and shown in a partially disassembled configuration;
- Figure 2 is a perspective, partially exploded view of an assembly comprising the square of Figure 1 and of a step of the method for joining two profiles according to an aspect of the present invention;
- Figure 3 is a perspective, partially exploded view of an assembly comprising a variant of the square for joining two profiles of Figure 1 and 2, partially disassembled;
- Figure 4 is a perspective, partially exploded view of an assembly comprising another embodiment of a square for joining two profiles according to the present invention.

With reference to the accompanying figures, the numeral1 globally refers to a square for joining two profiles 2 according to the present invention. In the following the same numeralis used for similar elements.

The square 1 for joining two profiles comprises a first 3 and a second half-portion 4 mutuallystifflyfastened to a first end 5 and free on a second end 6. Each half-portion 3, 4 is intended to be introduced, on the same side as the respectivefree end 6, into a slot 7 of a respective profile 2.

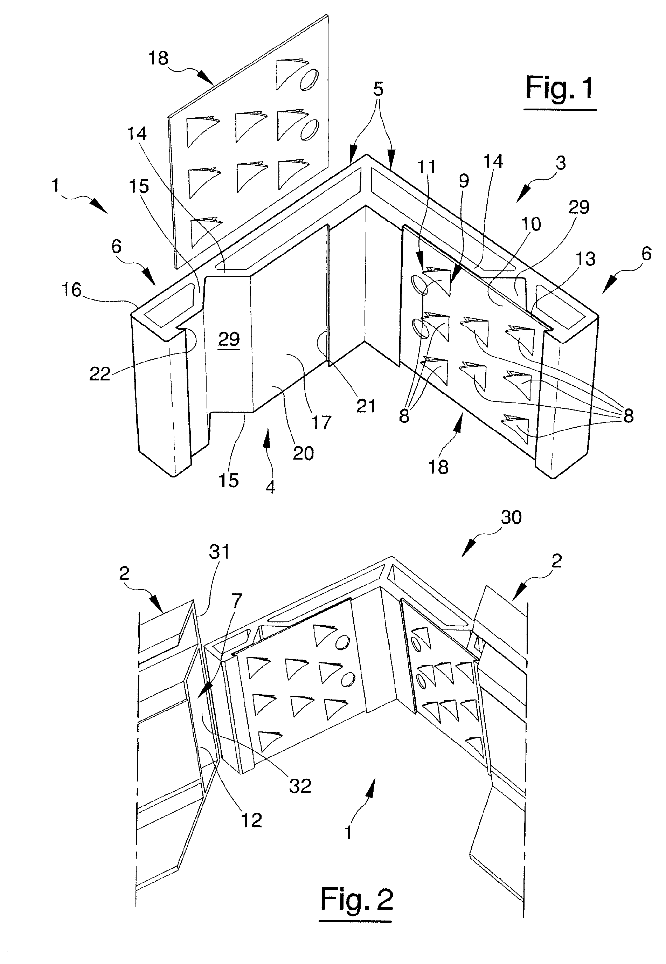

Preferably, at least the first half-portion 3 is provided with at least one tooth 8 having a first end 9 (see Figure 1) integral with a surface 10 of the first half-portion 3, and a second end 11 lying, at least when the tooth is not subject to forces (as shown in all of the figures), outside the lying plane of the surface 10 and positioned, with respect to the first end 9 of the tooth, in position more proximal to the first end 5 of the first half-portion 3.

Preferably, the second end 11 of the tooth 8 is positioned so that, when the first half-portion 3 is introduced into the slot 7 of the respective profile 2, the second end 11 lies inside the slot 7 and faces the inlet of the slot.

Advantageously, when the first half-portion 3 is introduced into the slot 7 of the respective profile 2, the second end 11 of the tooth 8 lies in position more proximal to the inlet of the slot 7 than the first end 9.

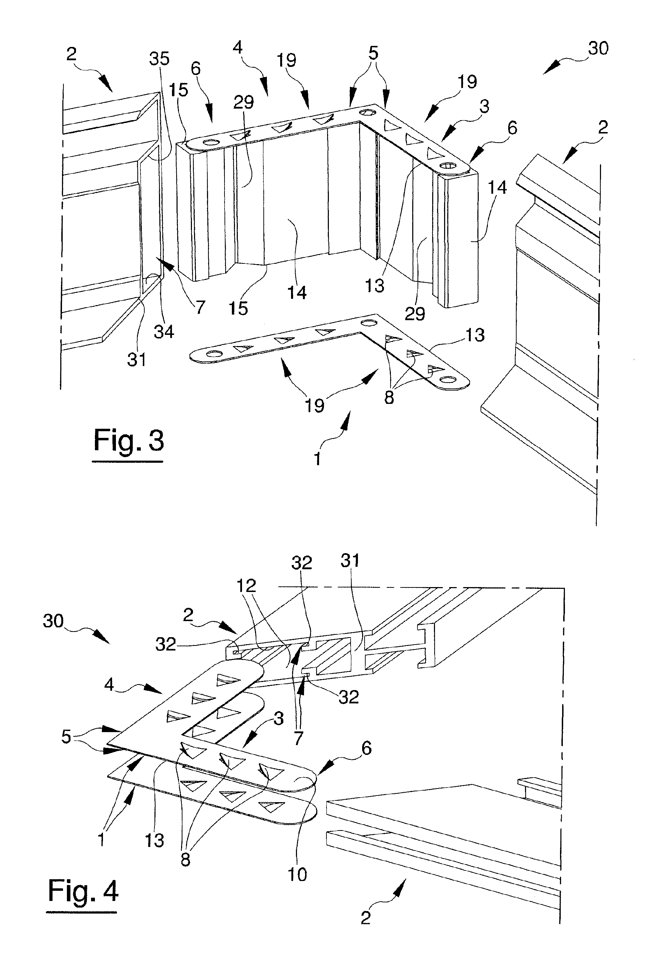

Preferably, when the first half-portion 3 is introduced into the slot 7, the tooth 8 is pressed between the aforesaid surface 10 of the first half-portion 3 and an inner surface (12 in Figures 2 and 4, 34 and 35 in Figure 3) of the aforesaid slot 7 of the profile.

Preferably, the tooth 8 is elastic. Preferably, when the tooth 8 (e.g. the second end 11 of the tooth 8 as shown by way of example in the figure) is subject to a force pointing towards the aforesaid surface 10 (e.g. as a result of the compression between the aforesaid surface 10 of the first half-portion 3 and the inner surface 12 or 34 or 35 of the aforesaid slot 7), the tooth bends so thatthe second end 11 thereof reacts elastically to the aforesaid bending with a force pointing away from the aforesaid surface 10. Preferably, as shown by way of example, during the aforesaid bending the second end 11 of the tooth 8 approaches the aforesaid surface 10 of the half-portion 3.

The tooth 8 can have a substantially laminar shape and develop on an inclined plane with respect to the aforesaid surface 10 (not shown) or on a curved surface (as shown in the figures), wherein e.g. the distance of the tooth from the aforesaid surface 10 of the first half-portion 3 increases more than linearly moving from the first 9 to the second end 11 of the tooth 8. Thus, advantageously, the free end 11 of the tooth is always arranged edgeways with respect to the aforesaid inner surface of the slot 7 of the profile, ensuring an adequate grip also with the tooth bent.

Preferably, the second end 11 of the tooth 8 has at least one tip facing the aforesaid first end 5 of the half-portion 3. For instance, the tooth 8 has a triangular laminar shape.

Preferably, as shown in the example of embodiments, the tooth 8 is obtained by making a cut in a laminar wall 13 of the first half-portion 3, the wall 13 defining the aforesaid surface 10, and then by bending on the first end 9 of the tooth. Thus, advantageously, the second end 11 of the tooth 8 is free, as shown in the figure.

In an alternative embodiment, not shown, the tooth 8 has a hook-like laminar shape, wherein the second free end 11, typically sharp, lies with respect to the first end 9 of the tooth 8 in a more distal position to the first end 5 of the respective half-portion, and the tooth 8 is bent so thatthe second end 11, which lies outside the surface 10, faces the first end 5.

Preferably, the tooth 8 is made of steel (typically though not necessarily stainlesssteel), still more preferably of hardened steel. Advantageously, the tooth 8 is made of spring steel. Thus, the tooth is given the desired elasticity. Preferably, the whole aforesaid wall 13 of the first half-portion 3 is made of the same material as the tooth and as one piece with it.

Preferably, in order to increase the grip of the square 1 on the profile 2, the first half-portion 3 is provided with a plurality of teeth 8 each according to the above. Typically, as shown in the figure, this plurality of teeth comprises at least three teeth. Preferably, the teeth 8 of the first half-portion are divided into one (Fig. 1 and 4) or two (Fig. 3) sub-groups and within each sub-group they are parallel to each other and lie all on the same plane.

Preferably, the first 3 and the second half-portion 4 are mutually stiffly fastened to the aforesaid first end 5 so as to form an angle, typically a right angle as shown in the figures. However, the present invention applies also when the two half-portions are aligned along the longitudinal development thereof (in other words, they form a flat angle), so as to be suitable for joining the ends of two profiles in a row.

Advantageously, as shown in the figure, the second half-portion 4 is wholly identical to the first half-portion 3. Thus, the square 1 has a plane of symmetry apt to bisect the angle formed by the two half-portions.

Considering now Figures 1 to 3, the first and the second half-portion 3, 4 can comprise each a main body 14, typically made of aluminum, stiffly fastened to the aforesaid first end 5 of the respective half-portion, to the main body 14 of the other half-portion (typically the two main bodies 14 of the first and of the second half-portion are made as one piece)and free on the aforesaid second end 6 of the respectivehalf-portion. Typically, the two main bodies 14 are mutually fastened at an angle, e.g. at a right angle.

Each main body 14 can have fourlateral surfaces (by way of example two surfaces on the sides 15, an outer surface 16 and an inner surface 17), typically developing longitudinally to the respective half-portion. By way of example, each main body has a rectangular orthogonal section (with respect to the aforesaid longitudinal development). It shouldbe noted that Figure 1 and 3 also show by way of example, merely to provide further details, an optional seat 29 for the known calking described above, which in the case of Figure 3 can also be carried out in addition to the use of the square 1. However, it should be pointed out thatthe present invention, thanks to the presence of the tooth 8, enables a steady fastening of the square 1 to the profile 2 simply by introducing the square into the profile, without the need for calking.

As shown by way of example in Figures 1 to 3, each main body 14 can be associated to a respective secondary body 18 (Figure 1) or 19 (Figure 3) comprising the aforesaid plurality of teeth 8. Preferably, the secondary body 18 or 19 has a laminar shape, typically plane, and defines the aforesaid wall 13. The secondary body is advantageously wholly made of the same aforesaid material as the tooth 8.

As shown by way of example in Figures 1 to 3, the secondary body (18 or 19) is advantageously fastened to a lateral surface of the respective main body.

With reference to the example of Figure 1 and 2, the aforesaid lateral surface can be advantageously the inner surface 17, since it is preferable to leave the wall of the profile 2 facing the outer surface 16 free from potentially deforming forces. Preferably, the inner surface 17 has a depressed seat 20 for housing the respective secondary body 18 embedded therein, which can be typically introduced by orthogonal sliding into the aforesaid seat 20. Thus, the opposite corners 21 and 22 formed by the seat 20, which are proximal to the ends 5 and 6 of the half-portion 3, 4, respectively, prevent the secondary body 18 from shifting longitudinally. As an alternative or in addition to the seat 20, preferably the secondary body 18 has one or more through holes for fastening to the respective main body 14 (e.g. by riveting). In an alternative solution, not shown, the two secondary bodies 18 can be mutually fastened (typically making one piece) on the first ends 5 of the two half-portions (thus the corner 21 is not necessary). In this case, the two secondary bodies 18 are typically mutually fastened at an angle, e.g.at a right angle, since they are transversal (i.e. not co-planar, typically orthogonal) one to the other.

With reference to the example in Figure 3, the aforesaid lateral surface can be advantageously the side surface 15. Preferably, the secondary body 19 has one or more through holes for fastening to the respective main body 14 (e.g. by riveting).

As shown by way of example in Figure 3, the secondary body 19 associated to one of the main bodies 14 is fastened, typically as one piece,on the first ends 5 of the two half-portions to the secondary body 19 associated to the other main body 14. Typically, the two secondary bodies 19 are mutually fastened at an angle, e.g.at a right angle, since they are mutually co-planar.

As shown by way of example in Figure 3, each main body 14 can be associated, typically on the two lateral side surfaces 15, to two respective secondary bodies 19, each according to the above.

As far as the configuration and/or position and/or fastening of the secondary body (or of the secondary bodies) to the main body, the various solutions shown in Figures 1 and 3 can be variously exchanged one for the other and/or combined one to the other. For instance, in order to improve the hold of the square, both the secondary body 18 shown in Figure 1 and one or bothof the secondary bodies 19 shown in Figure 3 can be provided for each main body 14.

With reference to the example of embodiment of Figure 4, the square 1 can consist of a first 3 and a second half-portion 4 (provided with teeth 8 according to the above) with laminar shape, typically substantiallyplane (except for teeth projection) and substantially co-planar or (not shown) transversal one to the other, typically orthogonal. As shown in Figure 4, such a square can advantageouslyapply to narrow profiles 2.

With reference to the Figure 2, 3 and 4, theyshow by way of example an assembly 30 comprising two profiles 2, typically of a frame, each profile havingon a free edge 31 at least one slot 7 developing inside and longitudinally to the profile, typically along the whole longitudinal development of the profile, and at least one square 1 according to the above. Each half-portion 3, 4 of the square 1 is introduced, on the same side as the respective free end 6 of the half-portion, into the aforesaid slot 7 of a respective profile, so thateach tooth 8 is pressed between the aforesaid surface 10 of the respective half-portion and an inner surface (12 in Figure 2 and 4, 34 and 35 in Figure 3) of the aforesaid slot of the profile. This compression causes the elastic bending of the teeth 8 tending to flatten on the aforesaid surface 10. The elastic reaction of the teeth 8 to this bending causes a permanent thrust of the second end 11 of the teeth against the aforesaid inner surface 12, 34 or 35, which prevents the square from disengaging from the slot 7. Preferably, the material which the tooth is made of (e.g. spring hardened steel) is harder than the material which the profile is made of (e.g. aluminum), so thatas a result of the aforesaid thrust of the second end 11 of the teeth against the aforesaid inner surface 12, 34 or 35, the second end 11, particularly if sharp, sticks, slightly penetrating, into the inner surface 12, 34, 35, which typically deforms plastically. Thus, the square 1 is integrally and permanently blocked in the profile 2.

Preferably, the inner surface 12 (or 34 in Figure 3) of the slot 7 faces another inner surface 32 (in Figure 2 and 4) or 35 (in Figure 3) of the slot 7, so as to support the thrust of the elastic tooth against the inner surface 12 or 34.

The surface 10 of the respective half-portion 3, 4 can point towards the inner face of the profile 2 and of the frame thereof (as shown in Figure 2) or, as an alternative or in addition thereto, towards the lateral face or faces of the profile (as in Figure 3 and 4).

As shown by way of example in Figure 4, the assembly 30 can comprise a pair of squares 1 as described above with reference to Figure 4, arranged parallel to and aligned with the orthogonal plane of the respective profile. The two squares 1 are introduced into a pair of slots 7 as described above, arranged parallel one to the other and mutually facing each other in a mirror-like fashion. The two squares 1 preferably face each other in a mirror-like fashion,so that the respective teeth 8 point in opposite directions (e.g. towards a respective lateral face of the profile).

In one aspect, the present invention relates to a method for joining two profiles 2, typically for manufacturing a frame, each profile having on a free edge 31 at least one slot 7 developing longitudinally to the profile, typically along the whole longitudinal development of the profile, by means of a square 1 according to the above, wherein each half-portion 3, 4 of the square 1 is introduced, on the same side as the respectivefree end 6 of the half-portion, into the aforesaid slot 7 of a respective profile 2, so thateach tooth 8 is pressed between the aforesaid surface 10 of the respective half-portion and an inner surface 12 or 34 of the aforesaid slot of the profile.

## Claims

1. A square (1) for joining two profiles (2), the square comprising a first (3) and a second (4) half-portion being mutually stiffly fastened to a first end (5) thereof and free on a second end (6) thereof, each half-portion being apt to be introduced, on the same side as the respective free end (6), into a respectiveslot (7) of a respective profile (2), wherein at least the first half-portion (3) is provided with a plurality of elastic teeth (8), each tooth of said plurality of teeth havinga first end (9) and a second end (11) facing said first end (5) of the first half-portion (3), and wherein, when said tooth is subject to a force pointing towards the first half-portion (3), said tooth bends and reacts elastically so th atsaid second end (11) of the tooth (8) is subject to a force pointing away from the first half-portion (3), and wherein each tooth ((8) has said first end (9) integral with a surface (10) of the first half-portion (3) and said second end (11) of the tooth (8) is free and lies, at least when the tooth is not subject to forces, outside said surface (10) and wherein, when said second end (11) of the tooth (8) is subject to a force pointing towards said surface (10), said second end (11) approaches the surface (10) and reacts elastically with a force pointing away from the surface (10),
**characterized in that** said each tooth (8) has a substantially laminar shape developing on a curved surface, wherein the distance of the tooth (8) from said surface (10) of the first half-portion (3) increases more than linearly moving from the first (9) to the second end (11) of the tooth.

2. The square (1) according to claim 1, wherein said second end (11) of the tooth (8) is located, with respect to the first end (9) of the tooth, in position more proximal to the first end (5) of the first half-portion (3).

3. The square (1) according to any one of the claims 1 to 2, wherein said each tooth (8) is obtained by making a cut in a wall (13) of said first half-portion (3), defining said surface (10), and by bending in correspondence of said first end (9) of the tooth integral with said wall (13).

4. The square (1) according to any one of the claims 1 to 3, wherein said second end (11) of said each tooth (8) has at least one tip facing the aforesaid first end (5) of the first half-portion (3).

5. The square (1) according to claim 4, wherein said each tooth has a triangular laminar shape.

6. The square (1) according to any one of the claims 1 to 5, wherein said each tooth(8) is made of hardened spring steel.

7. The square (1) according to claim 6, wherein said first half-portion (3) comprises a wall (13) defining the aforesaid surface (10) and made of the same material as the tooth.

8. The square (1) according to any one of the claims 1 to 7, wherein the second half-portion (4) has the same characteristics claimed for the first half-portion (3).

9. The square (1) according to any one of the claims 1 to 8, wherein the teeth (8) of the first (3) and/or of the second half-portion (4) are divided into only one sub-group and are parallel to one another.

10. The square (1) according to any one of the claims 1 to 9, wherein the first (3) and the second half-portion (4) comprise each a main body (14) stiffly fastened, at the said first end (5) of the respective half-portion, to the main body (14) of the other half-portion and free on the aforesaid second end (6) of the respective half-portion, each main body (14) havingfour lateral surfaces (15, 16, 17), developing longitudinally to the respective half-portion, and a rectangular orthogonal section, wherein each main body (14) is associated to a respective secondary body (18) comprising said plurality of teeth, the secondary body havinga plane laminar shape and being wholly made of the same material as said each tooth (8), and wherein said secondary body (18) is fastened to the inner lateral surface (17) of the respective main body, said inner lateral surface (17) havinga depressed seat (20) for housing the respectivesecondary body embedded therein, which can be inserted by orthogonal sliding into the aforesaid seat (20).

11. The square (1) according to claim 10, wherein the main body of the first and second half-portion is made of aluminum.

12. The square (1) according to claim 10 or 11, wherein the two main bodies of the first and second half-portion are made as one piece.

13. Assembly (30) comprising two profiles (2), typically made of aluminum, each profile havingon a free edge (31) at least one slot (7) developing longitudinally with respect to said profile, and at least one square (1) according to any one of the claims 10 to 12, wherein each half-portion (3, 4) of the square is introduced, on the same side as the respective free end (6) of the half-portion, into the slot (7) of a respective profile, so th atsaid at least one tooth (8) is pressed against an inner surface (12) of the aforesaid slot (7) of the profile (2), said surface (10) of the respective half-portion (3, 4) facing the inner side of the profile (2).
